# EUROPEAN PATENT SPECIFICATION

(11) **EP 1 211 170 B1**
(45) Date of publication and mention of the grant of the patent: **12.04.2006**
(21) Application number: 01125652.6
(22) Date of filing: 26.10.2001
(51) Int. Cl.: B62H 5/20, B62J 3/00, B62H 5/00

(54) **Locking device for a motorcycle, motorcycle with a locking device and a method for controlling a locking device for a motorcycle**
Motorradschlossvorrichtung, Motorrad mit Schlossvorrichtung und Verfahren zur Steuerung einer solchen Vorrichtung
Dispositif anti-vol pour motocyclettes, motocyclette avec un dispositif anti-vol et procedé pour contrôler le dispositif

(30) Priority: 30.11.2000 JP 2000363931
(43) Date of publication of application: 05.06.2002
(73) Proprietor: YAMAHA HATSUDOKI KABUSHIKI KAISHA, Iwata-shi Shizuoka-ken (JP)
(72) Inventor: Matsumoto, Taisuke, Yamaha Hatsudoki Kabushiki K., Iwata-shi, Shizuoka-ken (JP); Suzuki, Takashi, Kabushiki Kaisha YEC, Iwata Shizuoka (JP); Takeuchi, Toshio, Kabushiki Kaisha YEC, Iwata Shizuoka (JP)
(74) Representative: Grünecker, Kinkeldey, Stockmair & Schwanhäusser Anwaltssozietät

(56) References cited:
- EP-A- 0 822 127
- EP-A- 0 860 353
- EP-A- 0 953 700
- US-A- 5 612 669
- US-A- 5 900 806

## Description

The present invention relates to a locking device for a motorcycle according to the preamble of independent claim 1, a motorcycle with a locking device and a method for controlling locking device according to the preamble of independent claim 6. In particular it is provided an anti-theft locking device for a motorcycle. The motorcycle herein includes a small motorcycle such as a scooter, a motor driven bicycle such as a 50cc motorcycle and a small two-wheeled vehicle such as a motor-assisted bicycle.

As a locking device for preventing theft of a motorcycle, there is provided a shutter-type key lock for hiding a keyhole of a key cylinder into which an ignition key for starting an engine is to be inserted under a cover. Such a shutter-type key lock automatically locks a rear wheel when the shutter thereof is closed with a hand and is unlocked with an exclusive key for unlocking at the time of riding. A handle can be also locked with the shutter-type key lock.

A small motorcycle such as a scooter has a bag compartment formed under a hingedly openable seat and provided with a seat lock for locking the seat in a closed state. The seat lock is automatically locked by closing the seat and unlocked with an exclusive key or an ignition key.

In order to improve the convenience of the locking device for a motorcycle, a remote control device for a motorcycle which allows unlocking of the lock by remote control operation is designed by the present inventors and under development. The remote control device allows unlocking from a position away from the vehicle body, when an unlocking signal is sent from a transmitter carried by a user to a receiver mounted on a vehicle body. The unlocking signal is inputted to a control unit, whereupon an unlocking mechanism for a shutter-type key lock and a seat lock is actuated.

In motorcycles, an anti-theft device such as an immobilizer has been put to practical use in addition to such a locking device. The immobilizer, which includes a vibration sensor or a tilt sensor installed in a vehicle body, is actuated to sound an alarm when vibrations or a tilt is detected while a main switch is off. When the shutter-type key lock is unlocked and the main switch is turned on, the operation of the immobilizer is released and the alarm is not sounded. To employ the above-mentioned remote control device, it can be thought that the remote control device may be so constituted that when an unlocking signal is sent from a transmitter to a receiver on a vehicle body, the locking device is unlocked and the operation of the immobilizer is released by the unlocking signal.

When such a locking device for a motorcycle is provided with an unlocking informing mechanism to permit a user to recognize the release of locking, the convenience thereof is further enhanced. As such an unlocking informing mechanism, there is a thought of turning on and off flasher lamps several times. The blinking of the flash lamps is convenient because the release of locking can be recognized from a position away from the vehicle body when, for example, the locking is released by a remote control operation.

With the constitution of turning on and off flash lamps, however, there may arise a problem of blinking of the flash lamps during running by maloperation of the remote control. Also, the blinking may be difficult to recognize when the motorcycle is behind other vehicles in a parking lot accommodating a large number of vehicles.

Prior art document US 5,612,669 teaches a vehicle security system having enhanced false alarm compensation. The related system comprises a central lock and siren/lights. A sound is emitted when the system is disarmed by a specific button.

A locking device for a motorcycle, a motorcycle with a locking device as well as a method for controlling locking device as indicated above is known from closest prior art document EP 0 860 353 A1 which discloses all the features of the preamble of independent claim 1. In particular, said document teaches a two-wheeled vehicle which can be easily handled in a place where two-wheeled vehicles are parked in congestion. Said vehicle includes a transmitter for sending an identification signal, indicator means or a lock mounted on the two-wheeled vehicle, a receiving circuit for receiving the identification signal from the transmitter, and a control circuit for actuating lock-opening means or indicator means incorporated in the lock when the receiving circuit receives the predetermined identification signal. Said indicator means the two-wheeled vehicle's whereabouts by sound or light.

It is an objective of the present invention to provide a locking device for a motorcycle, a motorcycle with a locking device as well as a method for controlling locking device in which the convenience is improved.

According to a first aspect of the present invention, said objective is solved by a locking device for a motorcycle having the features of independent claim 1.

Preferably, said locking device for a motorcycle comprises a remote control receiver for a remote control operation, wherein said sound source is connected to the remote control receiver, and said sound source is provided for emitting a predetermined electronic sound for a predetermined period of time when an unlocking signal is inputted to said remote control receiver.

Preferably, said locking device for a motorcycle comprises an anti-theft device for controlling a main switch of the motorcycle.

According to a second aspect of the present invention, the objective mentioned above is solved by a motorcycle according to claim 4.

Preferably, said motorcycle comprises flasher units, wherein said flasher units are adapted to emit a light signal upon unlocking.

According to a method aspect of the present invention, the objective mentioned above is solved by a method for controlling locking device for a motorcycle having the features of independent claim 6.

Preferably, said method comprises a remote control operation, wherein an unlock signal is generated in accordance with said remote control operation and the sound is generated upon unlocking in accordance with said unlock signal.

Preferably, said method further comprises the steps of:
- generating an electronic sound in accordance with the selected electronic sound pattern,
- amplifying the generated electronic sound signal,
- emitting the amplified electronic sound signal as the sound.

It is an advantage of the present invention, to improve the convenience by providing means for informing a transition from a locked state to an unlocked state.

Preferred embodiments of the present invention are laid down in the dependent claims.

In the following, the present invention is explained in greater detail with respect to several embodiments thereof in conjunction with the accompanying drawings, wherein:
- Fig. 1: is a block diagram illustrating a basic constitution of a locking device according to an embodiment;
- Fig. 2: is a block diagram of a sound source unit;
- Fig. 3: is a flowchart illustrating the operation of the sound source unit of the locking device for a motorcycle according to an embodiment;
- Fig. 4: is a block diagram illustrating the constitution of a locking device with a shutter-type key lock and a seat lock according to an embodiment;
- Fig. 5: is a side view of a scooter-type motor cycle provided with the locking device for a motorcycle according to an embodiment;
- Fig. 6: is a side view of the vicinity of an attaching portion of the sound source unit;
- Fig. 7: is a front view of the vicinity of the attaching portion of the sound source unit;
- Fig. 8: is a top view of the vicinity of the attaching portion of the sound source unit; and
- Fig. 9: is a detail view of the vicinity of the attaching portion of the sound source unit.

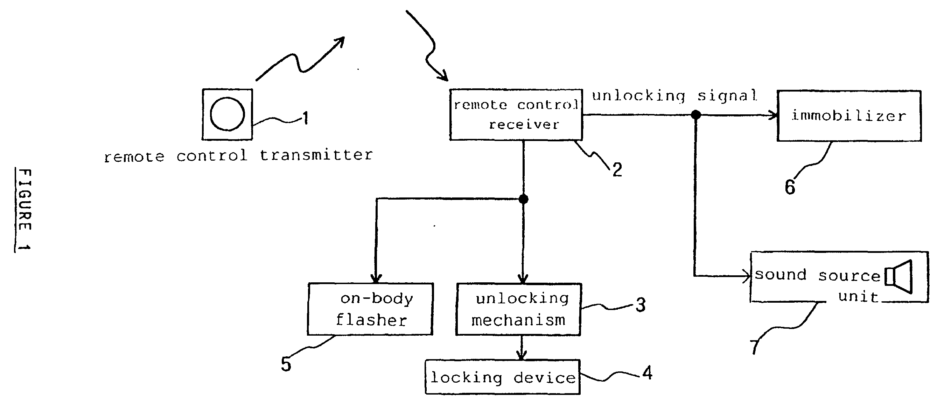

Fig. 1 is a block diagram illustrating the basic constitution of the lock device for a motorcycle according to an embodiment.

The embodiment shows a lock device utilizing a remote control device comprising a remote control transmitter 1 for releasing locking by remote control operation and a remote control receiver 2. The remote control receiver 2 is mounted on a vehicle body. The vehicle body is provided with a locking device 4 such as a shutter-type key lock for covering a key cylinder (not shown) and an unlocking mechanism 3 thereof. The remote control receiver 2 is connected to an anti-theft device (immobilizer) 6 and to a sound source unit 7 according to the embodiment. In this embodiment, the remote control receiver 2 is also connected to on-body flashers 5, which inform release of unlocking in response to reception of an unlocking signal. The operation of the remote control locking device is as follows.

The locking device 4 such as a shutter-type key lock is manually locked by an ordinary way. When the locking device is unlocked, an unlocking signal sent by operating the remote control transmitter 1 is received by the remote control receiver 2. Based on the signal, the unlocking mechanism 3 is actuated to unlock the locking device 4. When the unlocking signal is received, the on-body flashers 5 are turned on and off as an answer back for informing the sender of the reception of the signal. Based on the unlocking signal from the remote control transmitter 1, the operation of the anti-theft device such as an immobilizer mounted on the vehicle body is released, thereby allowing a user to ride the vehicle. In the embodiment, the unlocking signal also actuates the sound source unit 7, which generates a predetermined electronic sound to inform the user (sender) of the release of locking. The answer back by the on-body flashers 5 may be omitted.

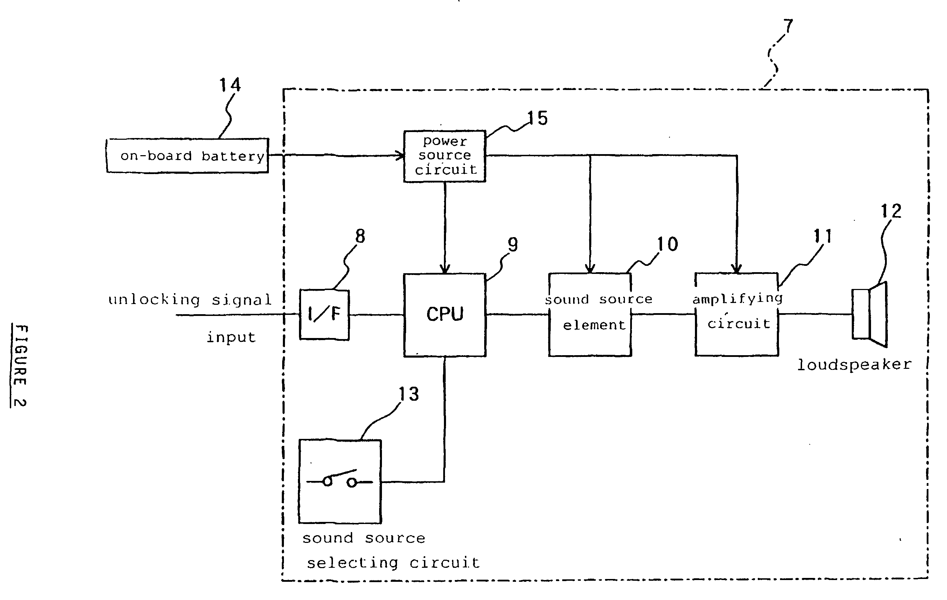

Fig. 2 is a block diagram of the above-mentioned sound source unit.

The sound source unit 7 comprises a CPU 9 consisting of a switch element connected to a on-board battery 14 and so on, a sound source selecting circuit 13 for selecting a required electronic sound pattern from a plurality of preset electronic sound patterns (signal-reception melodies), a sound source element 10 for generating an electronic sound of the set electronic sound pattern, an amplifying circuit 11 for amplifying the thus generated electronic sound signal, and a loudspeaker 12 for emitting the thus amplified electronic sound signal as a sound. The sound source unit 7 is formed as an integral component accommodated in a case or the like and mounted on the vehicle body as described below.

The operation of the sound source unit 7 constituted as above is as follows. When an unlocking signal is inputted from the remote control transmitter to the receiver on the vehicle body as described before, for example, the signal is inputted via an interface 8 (I/F) to the CPU 9 and recognized therein. Based on the unlocking signal, the CPU 9 activates the sound source element 10 in accordance with an electronic sound pattern selected with the sound source selecting circuit 13 to form an electronic sound signal. The electronic sound signal is emitted from the loudspeaker 12 via the amplifying circuit 11 toward the outside of the vehicle body, whereby an user who has sent the unlocking signal can recognize with the sound that the unlocking signal has been received by the vehicle body side.

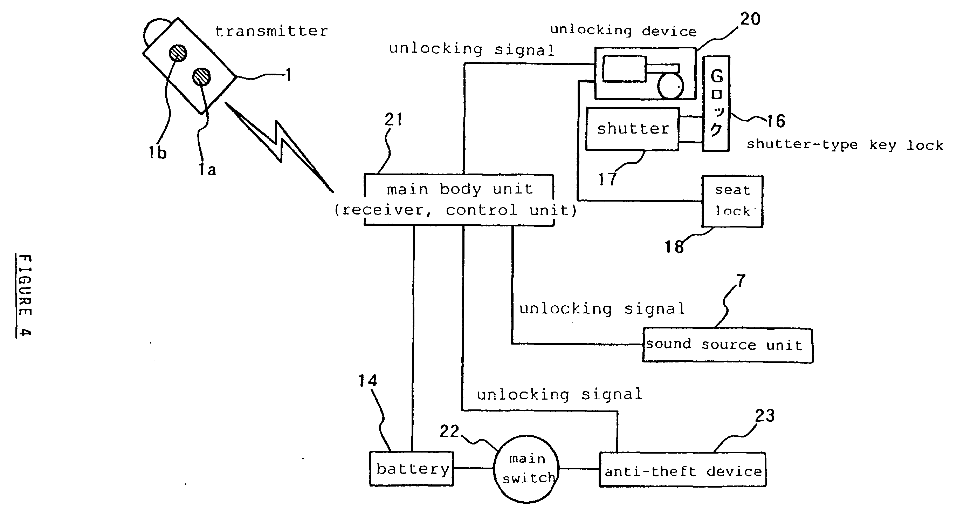

The user may set the sound for informing the release of the shutter-type key lock 16 (Fig. 4) and the sound for informing the release of the seat lock 18 (Fig. 4) in different electronic sounds from a plurality of predetermined sound sources so that the user can distinguish which lock has been operated The user may input and store such electronic sound patterns in a memory as electronic data and make a selection therefrom.

To the CPU 9, the sound source element 10, and the amplifying circuit 11 is supplied electric power from the on-board battery 14 via a power source circuit 15.

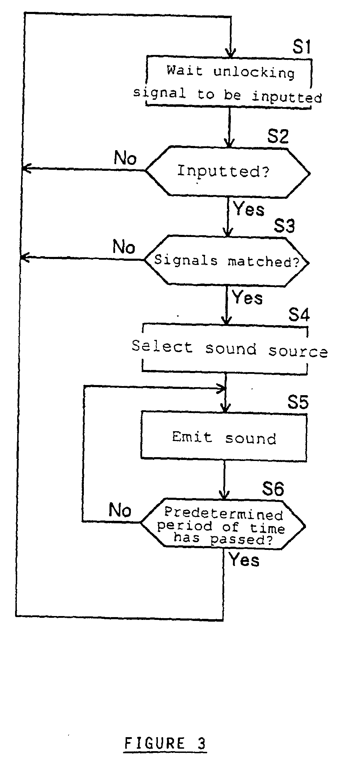

Fig. 3 is a flowchart illustrating the operation of the sound source unit of the locking device according to an embodiment.

The sound source unit 7 shown in Fig. 2 waits an input of an unlocking signal from the remote control transmitter 1 (Fig. 1) (Step 1). When a signal is inputted (Step 2), whether the signal pattern thereof matches the pattern of the unlocking signal previously stored in the CPU 9 is checked (Step 3). This is for the prevention of maloperation by a disturbing signal or other signals. When the signals match with each other, a sound source of an electronic sound pattern previously set in the CPU 9 is selected (Step 4), and an electronic sound is generated and emitted to the outside via the loudspeaker 12 (Fig. 2) (Step 5). The electronic sound is stopped after a lapse of a predetermined period of time, and the sound source unit 7 returns to the initial state (Step 6).

Fig. 4 is a block diagram illustrating the constitution of the locking device for a vehicle with a shutter-type key lock and a seat lock according to embodiment.

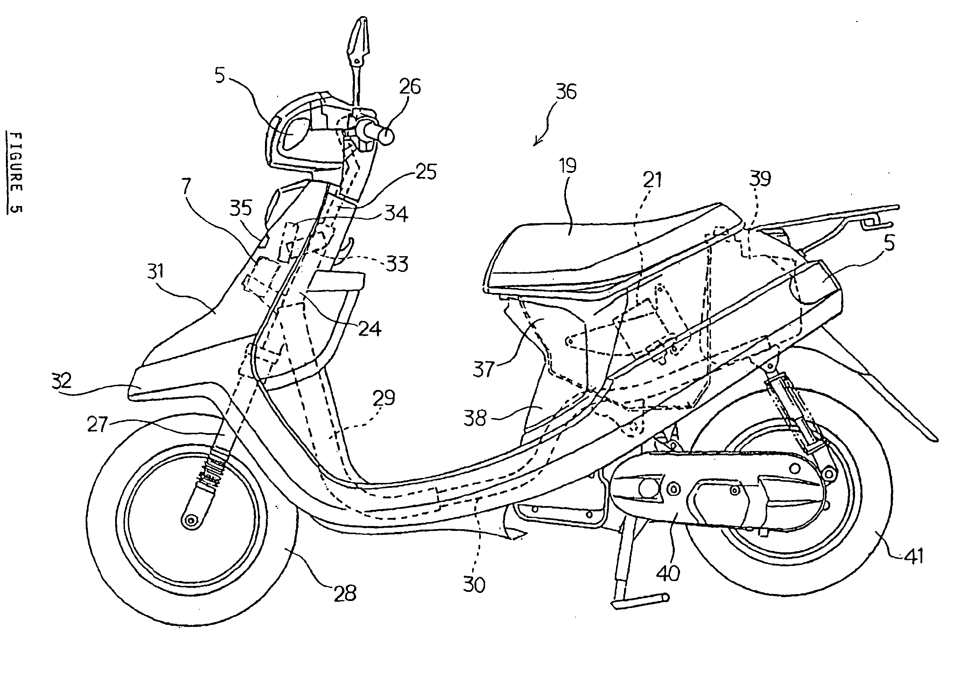

Designated as 16 is a shutter-type key lock (shutter-type anti-theft device) for hiding a keyhole of a key cylinder into which an ignition key for starting an engine is to be inserted with a shutter 17 and as 18 is a seat lock for locking the seat 19 (see Fig. 5) in a closed state. The shutter-type key lock 16 and the seat lock 18 are unlocked by an unlocking device 20. When the shutter 17 is closed with a hand, the shutter-type key lock 16 is automatically locked in that state. The seat lock 18 automatically locks the seat 19 when the seat 19 (Fig. 5) is closed.

The lock unlocking device 20 is electrically connected to a main body unit 21, which comprises a remote control receiver (not shown) for receiving a signal from the remote control transmitter 1, and a control unit (not shown) for controlling the operation of the unlocking device 20 based on the signal received by the receiver. To the main body unit 21, the sound source unit 7 for generating the electronic sound, shown in Fig. 2, a battery 14 and an anti-theft device (immobilizer) 23 are electrically connected. A main switch (ignition switch) 22 is connected to the battery 14 and the immobilizer 23.

The remote control transmitter 1 shown in Fig. 4 is carried by a rider. The other elements are mounted on a body of a motorcycle (Fig. 5). The remote control transmitter 1 is provided with a shutter-type key lock release button 1a and a seat lock release button 1 b.

In the remote control-type locking device having above constitution, when an unlocking signal is sent from the transmitter 1, the receiver of the main body unit 21 receives the signal. The signal is in turn sent via the control unit to the unlocking device 20, which unlocks the shutter-type key lock 16 and/or the seat lock 18. The unlocking signal also stops the operation of the anti-theft device 23. Moreover, the unlocking signal actuates the sound source unit 7 to make it generate a predetermined electronic sound.

Fig. 5 is a side view of a scooter-type motorcycle provided with the locking device for a motorcycle according to an embodiment.

As shown in Fig. 5, a head pipe 24 is located at an upper front part of a vehicle body 36 and a key cylinder 33 is disposed beside the head pipe 24. A steering shaft 25 rotatably extends through the head pipe 24. A handle 26 is secured to an upper end of the steering shaft 25 and a front fork 27 is connected to a lower end thereof. A front wheel 28 is rotatably supported at a lower end part of the front fork 27.

A down tube 29, which is bent midway, extends from the head pipe 24 toward the rear of the vehicle body 36. A pair of right and left rear frames 30 branching from the rear end of the down tube 29 are disposed toward the rear of the vehicle body 36.

A portion in the vicinity of the head pipe 24 is covered with a resin front cover 31, and a front fender 32 is provided at a lower part thereof. The front fender 32 is integrally molded with the front cover 31. A horn 34 for generating a klaxon sound is disposed in front of the head pipe 24 in the front cover 31. An opening provided in front of the horn 34 for allowing the sound from the horn 34 to be well transmitted to the outside forms a sound emitting port 35.

The sound source unit 7 is located in the vicinity of the horn emitting port, below the horn 34, in the front cover 31 above the front fender 32, and disposed such that the electronic sound thereof may be transmitted from the sound emitting port 35 to the outside.

A seat 19 is provided at an upper rear part of the vehicle body 36. The seat 19 includes a seat lock 18 (Fig. 4) and becomes rotatable about the front end thereof when the seat lock 18 is unlocked. A storing box 37 which opens at the top when the seat is rotated is provided under the seat 19 and a fuel tank 39 is disposed in the rear thereof. The main body unit 21 (Fig 4) is disposed in the storing box 37. The portion under the seat 19 is covered with a side cover 38. On-body flashers 5 are disposed on the right and left sides of a rear part of the side cover 38. On-body flashers 5 are also provided on the right and left sides of a front part of the handle 26.

An engine 40 is disposed below the storing box 37, and a rear wheel 41 is rotatably supported at the rear end thereof.

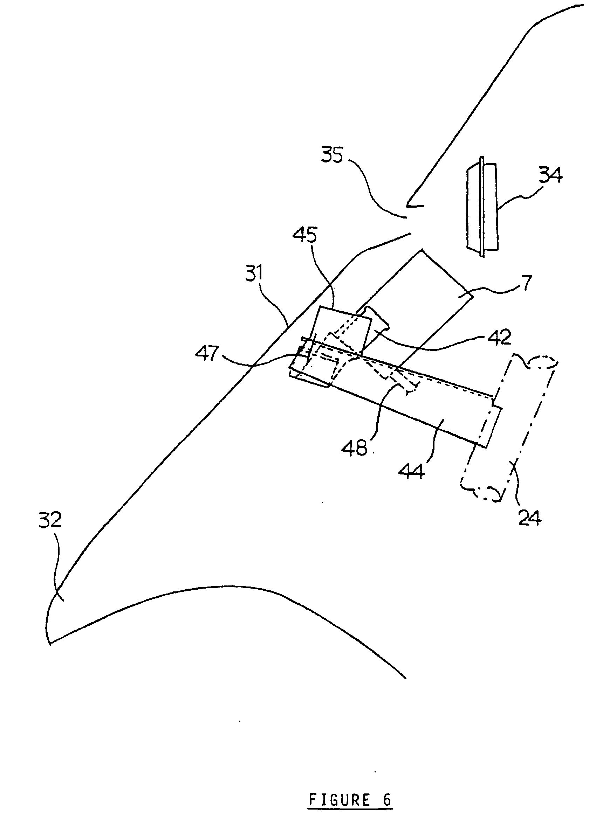

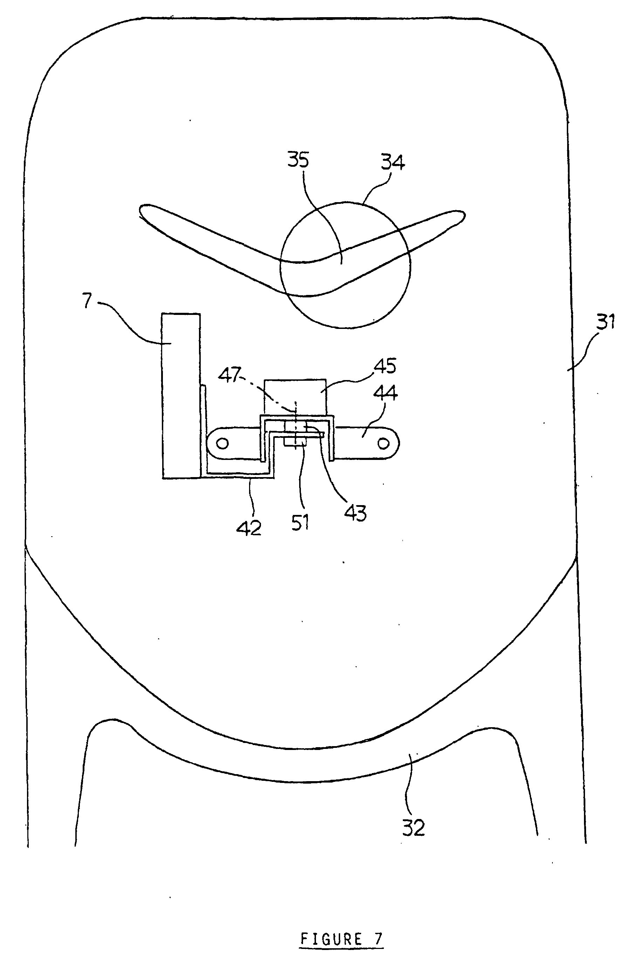

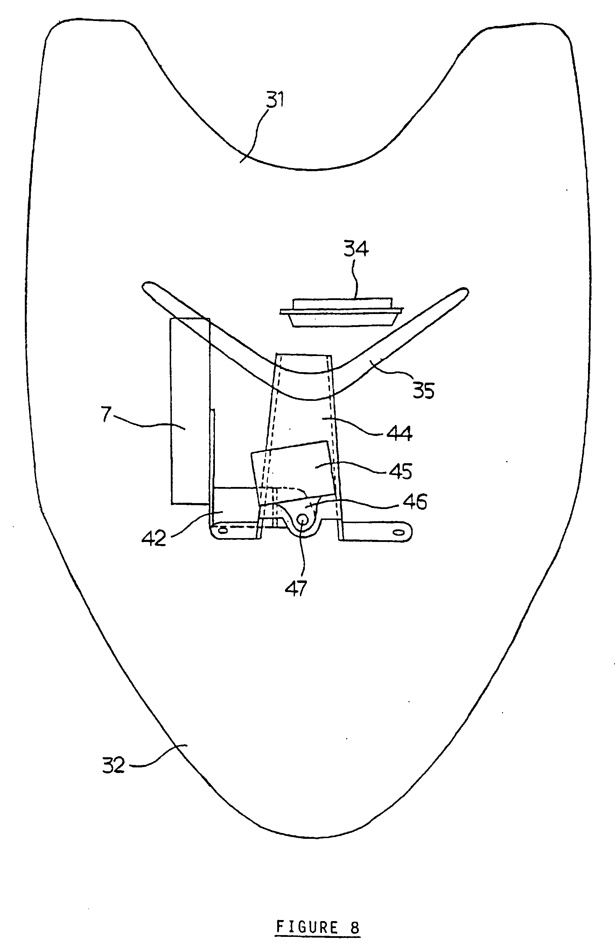

Fig. 6 is a side view of the vicinity of the attaching portion of the sound source unit, and Fig. 7 and Fig. 8 are a front view and a top view thereof, respectively.

The sound source unit 7 connected to the main body unit (Fig. 4) by a cable 48 is fixed to a support stay 44 via a connecting stay 42. One end of the support stay 44 is secured to the head pipe 24. On the support stay 44 is mounted electrical equipment 45 (a rectifier regulator, for example). The electrical equipment 45 has a flange 46 (Fig. 8), which is fixed to the support stay 44 by a bolt 47 screwed into a projection nut 43 (Fig. 7) provided on the lower surface of the support stay. The bolt 47 not only fixes the electrical equipment 45 but also integrally fastens the connecting stay 42 under the projection nut 43 with a nut 52 (Fig. 7).

The horn 34 is disposed above the attaching portion of the sound source unit, and the sound emitting port 35 is opened in front thereof. The sound emitting port 35 is not opened in a shape of a letter V shown in the drawings but only a portion opposed to the horn 34 is opened, in reality. The other portion is a recess formed on design and contributes to improving the appearance and enhancing the strength and waterproof capability.

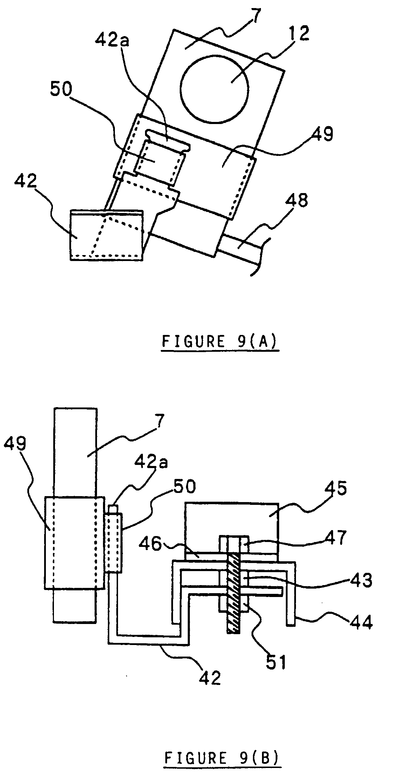

Fig. 9 is a detail view of the attaching portion of the sound source unit.

The sound source unit including the loudspeaker 12 is inserted into a rubber main body band 49 and supported thereby. The main body band 49 integrally includes a fixing band 50. An end 42a of the connecting stay 42 is inserted into the fixing band 50 and fixedly supported thereby. The connecting stay 42 is fixed to the support stay 44 by the bolt 47 as described before.

The embodiments described above are providing a locking device for a motorcycle including a sound source adapted to emit sound upon unlocking.

With this constitution, since a sound such as an electronic sound is generated by unlocking, release of locking may be recognized, thereby improving the convenience. In the case of a remote control operation, in particular, a user can immediately distinguish its own vehicle with the sound even in a parking lot accommodating a large number of vehicles, for example, thereby further improving the convenience.

The embodiments mentioned above are teaching a locking device which is actuated by remote control operation, wherein the sound source is connected to a remote control receiver mounted on a vehicle body so that the sound source emits a predetermined electronic sound for a predetermined period of time when an unlocking signal is inputted to the remote control receiver.

With this constitution, the vehicle body is provided with the receiver and the sound source connected thereto so that the locking is released and an electronic sound is emitted from the sound source to inform the neighborhood of the release of locking by an unlocking signal from a transmitter.

The locking device for a motorcycle according to the embodiments comprises a remote control receiver 2 for a remote control operation. The sound source 7 is connected to the remote control receiver 2, and said sound source 7 is provided for emitting a predetermined electronic sound for a predetermined period of time when an unlocking signal is inputted to said remote control receiver 7.

According to an embodiment described above, said sound source 7 comprises a sound source selecting circuit 13 for selecting an electronic sound pattern from a plurality of electronic sound patterns, a sound source element 10 for generating an electronic sound in accordance with the selected electronic sound pattern, an amplifying circuit 11 for amplifying the generated electronic sound signal, and a loudspeaker 12 for emitting the amplified electronic sound signal as the sound.

The locking device for a motorcycle according to the embodiments further comprises an anti-theft device 23 for controlling a main switch 22 of the motorcycle.

The embodiments described above are teaching a motorcycle with a locking device. The sound source 7 is mounted on a vehicle body 36 of the motorcycle. A sound emitting port 35 is opened in a front cover 31 located above a front fender 32. Said sound source 7 is mounted in the vicinity of said sound emitting port 35.

According to said embodiment, a sound emitting port is opened in a front cover located above a front fender, and in that the sound source is mounted in the vicinity of the sound emitting port.

With this constitution, since the sound source for informing release of locking is disposed in the vicinity of a sound emitting port for a horn opened in the front cover of, for example, a scooter, the sound from the sound source is fully emitted to the outside and thus easy to hear, thereby improving the reconcilability thereof. Also, the sound source is disposed in a relatively high position above a front fender, muddy water or the like from below does not arrive thereat, which is preferable in respect of waterproofing.

Said motorcycle comprises a locking device and flasher units 5, wherein said flasher units 5 are adapted to emit a light signal upon unlocking.

The embodiments described above are teaching a method for controlling locking device for a motorcycle with the step of: generating a sound upon unlocking.

Said method comprises a remote control operation. An unlock signal is generated in accordance with said remote control operation and the sound is generated upon unlocking in accordance with said unlock signal.

Said method further comprises the steps of selecting an electronic sound pattern from a plurality of electronic sound patterns, and emitting the sound in accordance with the selected electronic sound pattern.

Said method further comprises the steps of generating an electronic sound in accordance with the selected electronic sound pattern, amplifying the generated electronic sound signal, and emitting the amplified electronic sound signal as the sound.

In the embodiments, as described above, a sound such as an electronic sound is generated and emitted to the outside of the vehicle body by unlocking. Therefore, a user can recognized the unlocking, thereby improving the convenience. In the case of remote control operation, in particular, a user can immediately distinguish its own vehicle with the sound from a position away therefrom in a parking lot accommodating a large number of vehicles, thereby further improving the convenience.

## Claims

1. Locking device for a motorcycle comprising a sound source (7) adapted to emit a sound upon unlocking, **characterized in that** said sound source (7) comprises a sound source selecting circuit (13) for selecting an electronic sound pattern from a plurality of electronic sound patterns, a sound source element (10) for generating an electronic sound in accordance with the selected electronic sound pattern, an amplifying circuit (11) for amplifying the generated electronic sound signal, and a loudspeaker (12) for emitting the amplified electronic sound signal as the sound.

2. Locking device for a motorcycle according to claim 1, **characterized by** a remote control receiver (2) for a remote control operation, wherein said sound source (7) is connected to the remote control receiver (2), and said sound source (7) is provided for emitting a predetermined electronic sound for a predetermined period of time when an unlocking signal is inputted to said remote control receiver (7).

3. Locking device for a motorcycle according to claim 1 or 2, **characterized by** an anti-theft device (23) for controlling a main switch (22) of the motorcycle.

4. Motorcycle with a locking device for a motorcycle according to at least one of the claims 1 to 3, **characterized in that** said sound source (7) is mounted on a vehicle body (36) of the motorcycle, and a sound emitting port (35) is opened in a front cover (31) located above a front fender (32), and said sound source (7) is mounted in the vicinity of said sound emitting port (35).

5. Motorcycle with a locking device according to claim 4, **characterized by** flasher units (5), wherein said flasher units (5) are adapted to emit a light signal upon unlocking.

6. Method for controlling locking device for a motorcycle generating a sound upon unlocking **characterized by** the steps of:
- selecting an electronic sound pattern from a plurality of electronic sound patterns,
- emitting the sound in accordance with the selected electronic sound pattern.

7. Method for controlling locking device for a motorcycle according to claim 6, **characterized by** a remote control operation, wherein an unlock signal is generated in accordance with said remote control operation and the sound is generated upon unlocking in accordance with said unlock signal.

8. Method for controlling locking device for a motorcycle according to claim 6 or 7, **characterized by**
- generating an electronic sound in accordance with the selected electronic sound pattern,
- amplifying the generated electronic sound signal,
- emitting the amplified electronic sound signal as the sound.

## Patentansprüche

1. Verriegelungsvorrichtung für ein Motorrad, die eine Schallquelle (7) umfasst, die so eingerichtet ist, dass sie beim Entriegeln einen Schall emittiert, **dadurch gekennzeichnet, dass** die Schallquelle (7) eine Schallquellen-Auswählschaltung (13) zum Auswählen eines elektronischen Schallmusters aus einer Vielzahl elektronischer Schallmuster, ein Schallquellenelement (10) zum Erzeugen eines elektronischen Schalls entsprechend dem ausgewählten elektronischen Schallmuster, eine Verstärkungsschaltung (11) zum Verstärken des erzeugten elektronischen Schallsignals und einen Lautsprecher (12) zum Emittieren des verstärkten elektronischen Schallsignals als den Schall umfasst.

2. Verriegelungsvorrichtung für ein Motorrad nach Anspruch 1, **gekennzeichnet durch** einen Fernsteuerungsempfänger (2) für eine ferngesteuerte Bedienung, wobei die Schallquelle (1) mit dem Fernsteuerungsempfänger (2) verbunden ist und die Schallquelle (7) vorhanden ist, um einen vorgegebenen elektronischen Schall über eine vorgegebene Zeitdauer zu emittieren, wenn ein Entriegelungssignal in den Fernsteuerungsempfänger (7) eingegeben wird.

3. Verriegelungsvorrichtung für ein Motorrad nach Anspruch 1 oder 2, **gekennzeichnet durch** eine Diebstahlschutzvorrichtung (23) zum Steuern eines Hauptschalters (22) des Motorrades.

4. Motorrad mit einer Verriegelungsvorrichtung für ein Motorrad nach wenigstens einem der Ansprüche 1 bis 3, **dadurch gekennzeichnet, dass** die Schallquelle (7) an einem Fahrzeugkörper (36) des Motorrades angebracht ist, und sich ein Schallemissionskanal (35) in einer vorderen Abdeckung (31) öffnet, die sich über einem vorderen Kotflügel (32) befindet, und die Schallquelle (7) in der Nähe des Schallemissionskanals (35) angebracht ist.

5. Motorrad mit einer Verriegelungsvorrichtung nach Anspruch 4, **gekennzeichnet durch** Blinkeinheiten (5), wobei die Blinkeinheiten (5) so eingerichtet sind, dass sie beim Entriegeln ein Lichtsignal emittieren.

6. Verfahren zum Steuern einer Verriegelungsvorrichtung eines Motorrades, die beim Entriegeln einen Schall erzeugt, **gekennzeichnet durch** die folgenden Schritte:
Auswählen eines elektronischen Schallmusters aus einer Vielzahl elektronischer Schallmuster,
Emittieren des Schalls entsprechend dem ausgewählten elektronischen Schallmuster.

7. Verfahren zum Steuern einer Verriegelungsvorrichtung für ein Motorrad nach Anspruch 6, **gekennzeichnet durch** eine ferngesteuerte Bedienung, wobei ein Entriegelungssignal entsprechend der ferngesteuerten Bedienung erzeugt wird und der Schall beim Entriegeln entsprechend dem Entriegelungssignal erzeugt wird.

8. Verfahren zum Steuern einer Verriegelungsvorrichtung für ein Motorrad nach Anspruch 6 oder 7, **gekennzeichnet durch**:
Erzeugen eines elektronischen Schalls entsprechend dem ausgewählten elektronischen Schallmuster,
Verstärken des erzeugten elektronischen Schallsignals,
Emittieren des verstärkten elektronischen Schallsignals als den Schall.

## Revendications

1. Dispositif de verrouillage pour motocyclette comprenant une source sonore (7) adaptée pour émettre un son lors du déverrouillage, **caractérisé en ce que** ladite source sonore (7) comprend un circuit de sélection de source sonore (13) pour sélectionner un motif sonore électronique parmi une pluralité de motifs sonores électroniques, un élément de source sonore (10) pour générer un son électronique selon le motif sonore électronique sélectionné, un circuit d'amplification (11) pour amplifier le signal sonore électronique généré, et un haut-parleur (12) pour émettre le signal sonore électronique amplifié en tant que son.

2. Dispositif de verrouillage pour motocyclette selon la revendication 1, **caractérisé par** un récepteur de commande à distance (2) pour une opération de commande à distance, dans lequel ladite source sonore (7) est reliée au récepteur de commande à distance (2), et ladite source sonore (7) est prévue pour émettre un son électronique prédéterminé pendant un temps prédéterminé lorsqu'un signal de déverrouillage est fourni audit récepteur de commande à distance (2).

3. Dispositif de verrouillage pour motocyclette selon la revendication 1 ou 2, **caractérisé par** un dispositif antivol (23) pour commander un interrupteur principal (22) de la motocyclette.

4. Motocyclette comportant un dispositif de verrouillage pour motocyclette selon au moins une des revendications 1 à 3, **caractérisée en ce que** ladite source sonore (7) est montée sur une carrosserie (36) de la motocyclette, et un orifice d'émission sonore (35) est ouvert dans un capot avant (31) situé au-dessus d'une aile avant (32), et ladite source sonore (7) est montée au voisinage dudit orifice d'émission sonore (35).

5. Motocyclette avec dispositif de verrouillage selon la revendication 4, **caractérisée par** des unités de feu clignotant (5), dans laquelle lesdites unités de feu clignotant (5) sont adaptées pour émettre un signal lumineux lors du déverrouillage.

6. Procédé pour commander un dispositif de verrouillage pour motocyclette générant un son lors du déverrouillage, **caractérisé par** les étapes consistant à :
- sélectionner un motif sonore électronique parmi une pluralité de motifs sonores électroniques,
- émettre le son selon le motif sonore électronique sélectionné.

7. Procédé pour commander un dispositif de verrouillage pour motocyclette selon la revendication 6, **caractérisé par** une opération de commande à distance, dans lequel un signal de déverrouillage est généré selon ladite opération de commande à distance et le son est généré lors du déverrouillage selon ledit signal de déverrouillage.

8. Procédé pour commander un dispositif de verrouillage pour motocyclette selon la revendication 6 ou 7, **caractérisé par** le fait de
- générer un son électronique selon le motif sonore électronique sélectionné,
- amplifier le signal sonore électronique généré,
- émettre le signal sonore électronique amplifié en tant que son.
